# FASCICULE DE BREVET EUROPEEN

(11) **EP 2 814 635 B1**
(45) Date de publication et mention de la délivrance du brevet: **13.07.2016**
(21) Numéro de dépôt: 13749669.1
(22) Date de dépôt: 30.01.2013
(51) Int. Cl.: B64F 5/00

(54) **OUTILLAGE DE LOCALISATION, NOTAMMENT D'UNE EXTREMITÉ DE TIGE COULISSANTE OU DE CAISSON D'ATTERRISSEUR D'AERONEF**
POSITIONIERUNGSWERKZEUG, INSBESONDERE FÜR EINE VERSCHIEBBARE STANGE ODER EIN LUFTFAHRZEUGFAHRWERKGEHÄUSE
LOCATING TOOL, IN PARTICULAR FOR A SLIDING ROD END OR AN AIRCRAFT LANDING GEAR CASING

(30) Priorité: 13.02.2012 CA 2767791
(43) Date de publication de la demande: 24.12.2014
(73) Titulaire: Messier-Dowty, Inc., Ajax, Ontario L1S 2GB (CA)
(72) Inventeur: AUBIN, Alain Paul, Sainte-Anne-des-Plaines, Québec J0N 1H0 (CA); NISTEA, Radu, Saint-Eustache, Québec J7R 6J9 (CA); POIRIER, Alexandre, St-Jérôme, Québec J7Z 6S2 (CA)
(74) Mandataire: Parzy, Benjamin Alain
(86) Numéro de dépôt international: PCT/CA2013/050070
(87) Numéro de publication internationale: WO 2013/120193

(56) Documents cités:
- WO-A2-03/037564
- CN-U- 201 833 217

## Description

L'invention est relative à un outillage de localisation pouvant être utilisé notamment pour localiser une tige coulissante ou de caisson d'atterrisseur d'aéronef sur un gabarit d'usinage ou de montage.

### ARRIERE PLAN DE L'INVENTION

On sait que les tiges coulissantes ou les caissons d'atterrisseurs comportent bien souvent des extrémités en T. Les tiges coulissantes peuvent par exemple comporter à leur extrémité inférieure un essieu réalisé intégralement avec le corps de la tige destiné à recevoir des roues, tandis que les caissons peuvent comporter à leur extrémité supérieure une traverse également réalisée intégralement avec le corps du caisson pour recevoir à ses extrémités les pivots d'articulation de l'atterrisseur sur l'aéronef.

Il importe de pouvoir disposer à la jonction entre le corps de la pièce et la portion transversale (essieu, traverse) un outillage de localisation pour pouvoir recevoir la pièce dans un gabarit d'usinage, par exemple pour procéder aux usinages de finition du corps (notamment le revêtement et la rectification externe ou interne du corps de la pièce). En général, la pièce comporte un alésage dans la paroi de la portion transversale, s'étendant dans l'axe du corps de la pièce.

L'outillage de localisation classiquement utilisé est un centreur qui comporte un organe de centrage qui est rapporté sur la pièce pour saillir de celle-ci et ainsi permettre le positionnement de la pièce sur un gabarit d'usinage ou de montage.

Pour ce faire, l'organe de centrage du centreur comporte une portée terminée qui est introduite dans l'alésage de la pièce. La portée est introduite dans l'alésage jusqu'à ce qu'un épaulement du centreur vienne buter contre une face externe de la pièce. Le centreur est maintenu en position sur la pièce au moyen d'une bride qui s'étend contre la face interne de la pièce, de l'autre côté de la face externe de la pièce, et qui est serrée au moyen d'une tige ayant une tête portant sur la bride, et qui traverse l'organe de centrage pour recevoir un écrou de serrage.

Un problème parfois rencontré est que la face interne de la pièce n'est pas parallèle à sa face externe. On pourrait alors prévoir une bride à face d'appui oblique faisant un angle adéquat avec la face externe de la pièce. Cependant, il est très difficile de contrôler l'orientation de la bride lors du serrage, puisque le centreur obstrue complètement l'alésage. En outre, une telle bride ne peut être utilisée que pour un seul type d'angle.

De plus, WO 03/037564 A2 divulgue un outillage de localisation selon le préambule de la revendication 1.

### OBJET DE L'INVENTION

L'invention a pour objet un outillage de localisation pouvant être facilement monté sur un alésage d'une pièce dont les faces internes et externes sur lesquelles débouchent l'alésage ne sont pas parallèles.

### RESUME DE L'INVENTION

En vue de la réalisation de ce but, on propose un outillage de localisation destiné à être installé dans un alésage d'une pièce qui traverse une paroi de celle-ci délimitée entre une face externe et une face interne, comportant :
- un organe de localisation prolongé une portée s'étendant en saillie de celui-ci pour son introduction à ajustement dans l'alésage de la pièce, jusqu'à contact d'un épaulement terminant la portée contre la face externe de la pièce ;
- une bride destinée à prendre appui contre la face interne de la pièce ;
- une tige de serrage équipée d'une tête prenant appui sur la bride, et traversant la bride et l'organe de centrage pour recevoir un écrou de serrage contre un fond de l'organe de localisation.

Selon l'invention, la tête de la tige comporte une base de forme convexe qui coopère avec une surface d'appui sur la bride de telle sorte à permettre une orientation angulaire de la bride.

Ainsi, même si les faces interne et externe de la pièce ne sont pas parallèles, la possibilité d'orientation offerte par la tête à base convexe permet un appui homogène de la bride contre la face interne de la pièce.

Selon un mode particulier de réalisation, la bride est de forme générale oblongue et comporte deux flancs parallèles, la bride étant reçue dans un logement à flancs parallèles ménagé dans la portée de l'organe de centrage.

Ainsi, même lorsque le centreur est en place sur la pièce, on connaît très précisément l'orientation angulaire de la bride. L'organe de localisation peut alors être tourné avant son serrage pour positionner angulairement la bride, par exemple, pour faire tomber ses extrémités dans des encoches intérieures de la pièce, si celle-ci en est pourvue, ou pour orienter la bride selon une ligne de plus grande pente de la face interne de la pièce.

### BREVE DESCRIPTION DES DESSINS

L'invention sera mieux comprise à la lumière de la description qui suit d'un mode particulier de réalisation non limitatif de l'invention, en référence aux figures des dessins annexés parmi lesquelles :
- la figure 1 est une vue en perspective de l'outillage de localisation de l'invention ;
- la figure 2 est une vue de l'outillage de la figure 1 en place sur la partie supérieure d'un caisson d'atterrisseur d'aéronef ;
- la figure 3 est une vue en coupe de l'outillage en place sur le caisson d'atterrisseur.

### DESCRIPTION DETAILLEE DE L'INVENTION

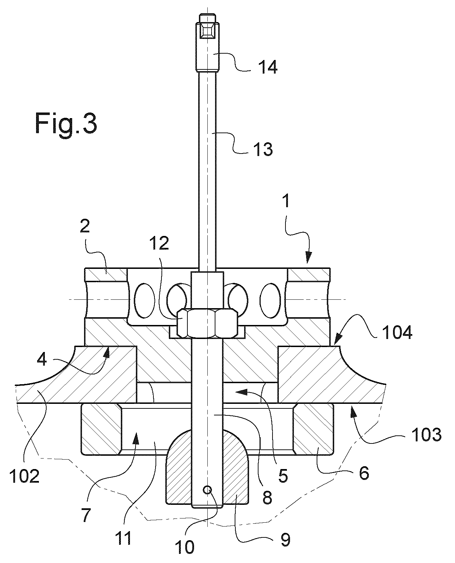

En référence aux figures, l'outillage de localisation de l'invention est destiné à équiper ici un caisson 100 d'atterrisseur qui comporte un corps 101 s'étendant ici selon un axe Z et terminé en partie supérieure par une traverse 102 s'étendant selon un axe X, dont les extrémités sont destinées à recevoir des pivots d'articulation de l'atterrisseur sur l'aéronef. La traverse 102 est percée sensiblement selon l'axe Z et présente ainsi un alésage qui traverse la paroi de la traverse 102 entre une face interne 103 et une face externe 104 de celle-ci. Sur la figure 3, on remarquera que la face interne 103 et la face externe 104 ne sont pas parallèles, mais inclinées d'un petit angle (environ deux degrés)

L'outillage de localisation comporte un organe de localisation, ici un centreur 1, qui est destiné à dépasser de la pièce à équiper pour faciliter son positionnement dans un gabarit d'usinage ou de montage. Le centreur 1 comporte ici une jupe cylindrique 2 qui est percée à intervalles réguliers, et qui est prolongée axialement par une portée 3 ayant un diamètre extérieur ajusté à celui de l'alésage du caisson 100 pour y pénétrer avec un faible jeu. Comme cela est visible à la figure 3, la portée 3 est introduite dans l'alésage jusqu'à ce qu'un épaulement, en l'occurrence la face arrière 4 de la jupe 2, vienne en appui contre la face externe 104 du caisson 100.

La portée 3 a été fraisée en son centre pour présenter un logement central à flancs parallèles 5. Une bride 6 de forme oblongue présentant deux flancs parallèles est positionnée dans le logement de la portée de sorte que les flancs de la bride 6 et les flancs du logement 5 coopèrent avec un faible jeu. Un passage traversant 7 est ménagé dans la bride 6 pour permettre l'introduction dans celle-ci d'une tige de serrage 8 filetée. Le passage traversant 7 est lui-même de contour oblong parallèle à un contour extérieur de la bride 6. La tige de serrage 8 a une extrémité munie d'une tête 9 à base sphérique. Ici, la tête 9 est rapportée sur l'extrémité de la tige de serrage et maintenue sur celle-ci au moyen d'une broche 10.

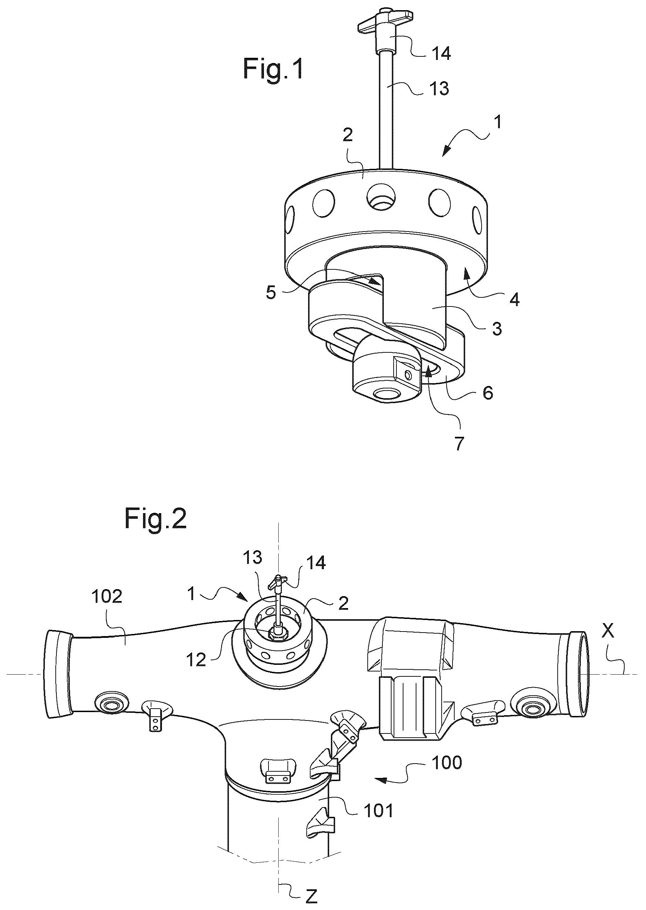

Une empreinte sphérique est ménagée au milieu de du passage traversant 7, dans les flancs intérieurs de celui-ci, pour recevoir à rotulage la base sphérique de la tête 9, ce qui permet une libre orientation de la bride 6. Sur la figure 1, on voit nettement la pénétration de la base sphérique dans l'empreinte sphérique ménagée dans la bride 6.

Par ailleurs, la tige de serrage 8 passe au travers d'un perçage central du centreur 1 pour dépasser d'un fond de celui-ci et recevoir un écrou de serrage 12. La tige de serrage 8 est prolongée d'une tige de manoeuvre 13 terminée par une poignée de manoeuvre 14.

L'utilisation de l'outil de localisation de l'invention est la suivante. On commence par faire pénétrer la bride 6 à l'intérieur de l'alésage de la pièce 100. Pour ce faire, l'écrou 12 est enlevé, et la tige de serrage 8 repoussée à fond dans le perçage central du centreur 1. Grâce à la forme oblongue du passage traversant 7, la bride peut être inclinée et couchée contre la tige de serrage 8, ce qui facilite l'introduction de la bride 6 dans la pièce 100.

On rapporte ensuite le centreur 1 dans l'alésage de la pièce 100, jusqu'à ce que la face arrière 4 du cylindre de prise 2 du centreur 1 vienne en butée contre la face externe 104. En tirant sur la tige de serrage 8 via la poignée de manoeuvre 14, on force la bride 6 à buter contre la face interne 103 et ainsi à se redresser. La base sphérique de la tête 9 est alors introduite dans l'empreinte sphérique de la bride 6. Par tâtonnement, on oriente la bride de sorte à la faire pénétrer dans le logement 5 de la portée 3. La bride 6 est alors astreinte angulairement. De préférence, avant serrage, on orientera le centreur 1 de sorte que la bride 6 s'étende contre la face interne 103 selon une ligne de plus grande pente par rapport à la face externe 104. Enfin, on visse l'écrou 12 sur la tige de serrage 8 jusqu'à son serrage contre le fond du centreur 1. L'outillage est alors en place. La possibilité de rotulage offerte par la coopération de l'empreinte sphérique de la bride 6 avec la base sphérique de la tête 9 permet la libre orientation de la bride de sorte que celle-ci appuie de façon égale sur la face interne de part et d'autre de la tige de serrage 8, en s'accommodant de l'inclinaison de la face interne 103.

En outre, le positionnement de la bride 6 dans le logement 5 empêche les flancs de la bride de s'écarter sous l'effet du serrage.

L'invention n'est bien sûr pas limitée à ce qui vient d'être décrit, mais englobe toute variante entrant dans le cadre défini par les revendications.

En particulier, bien que l'on ait indiqué que la base de la tête de la tige de serrage était sphérique et coopérait avec une empreinte sphérique ménagée dans des flancs intérieurs d'un passage traversant la bride, on pourra plus généralement prévoir une tête à base convexe coopérant avec une surface d'appui de la bride qui permet sa libre orientation pour appuyer de façon homogène sur la face interne de la pièce. Par exemple, on pourra prévoir une tête à base cylindrique convexe coopérant avec une surface d'appui concave également cylindrique.

## Revendications

1. Outillage de localisation destiné à être installé dans un alésage d'une pièce qui traverse une paroi de celle-ci délimitée entre une face externe et une face interne, comportant :
- un organe de localisation (2) prolongé une portée (3) s'étendant en saillie de celui-ci pour son introduction à ajustement dans l'alésage de la pièce, jusqu'à contact d'un épaulement (4) terminant la portée contre la face externe de la pièce ;
- une bride (6) destinée à prendre appui contre la face interne de la pièce ;
**caractérisé**
- **par** une tige de serrage (8) équipée d'une tête (9) prenant appui sur la bride, et traversant la bride et l'organe de centrage pour recevoir un écrou de serrage (12) contre un fond de l'organe de localisation ;
- et en ce que la tête de la tige comporte une de forme convexe qui coopère avec une surface d'appui sur la bride de telle sorte à permettre une orientation angulaire de la bride.

2. Outillage de localisation selon la revendication 1, dans lequel la base de la tête de la vis de serrage (8) est de forme sphérique et coopère avec une empreinte sphérique réalisée sur des flancs intérieurs d'un passage traversant de la bride.

3. Outillage de localisation selon la revendication 1, dans lequel la bride est de forme oblongue et présentant des flancs parallèles, en étant reçue dans un logement central (5) de la portée à flancs parallèles.

4. Outillage de localisation selon la revendication 3, dans lequel la bride comporte un passage traversant oblong.

5. Outillage de localisation selon la revendication 1, dans lequel l'organe de localisation est une jupe cylindrique (2).

6. Outillage de localisation selon la revendication 1, dans lequel la tige de serrage (8) est prolongée d'une tige de manoeuvre (13) terminée par une pognée de manoeuvre (14).

## Patentansprüche

1. Positionierungswerkzeug, das dazu bestimmt ist, in einer Bohrung eines Teils angeordnet zu werden, die eine Wand desselben durchsetzt, welche zwischen einer Außenfläche und einer Innenfläche begrenzt ist, umfassend:
- ein Positionierungselement (2), das eine Auflagefläche (3) verlängert, die von demselben vorsteht, um bis zum Kontakt einer die Auflagefläche abschließenden Schulter (4) an der Außenfläche des Teils passend in die Bohrung des Teils eingeführt zu werden;
- einen Flansch (6), der dazu bestimmt ist, an der Innenfläche des Teils zur Anlage zu kommen;
**gekennzeichnet durch** einen Einspannschaft (8), der mit einem an dem Flansch zur Anlage kommenden Kopf (9) versehen ist und den Flansch und das Zentrierelement durchsetzt, um eine Spannmutter (12) zum Festziehen gegen einen Boden des Positionierungselements aufzunehmen;
- und **dadurch**, dass der Kopf des Schaftes eine Basis konvexer Form umfasst, die mit einer Anlagefläche an dem Flansch derart zusammenwirkt, dass eine Winkelausrichtung des Flansches ermöglicht wird.

2. Positionierungswerkzeug nach Anspruch 1, wobei die Basis des Kopfes der Spannschraube (8) eine Kugelform hat und mit einem kugelförmigen Eindruck zusammenwirkt, der an Innenflanken eines Durchgangs des Flansches ausgebildet ist.

3. Positionierungswerkzeug nach Anspruch 1, wobei der Flansch eine längliche Form hat und parallele Flanken aufweist, während er in einer zentralen Aufnahme (5) der Auflagefläche mit parallelen Flanken aufgenommen ist.

4. Positionierungswerkzeug nach Anspruch 3, wobei der Flansch einen länglichen Durchgang umfasst.

5. Positionierungswerkzeug nach Anspruch 1, wobei das Positionierungselement eine zylindrische Schürze (2) ist.

6. Positionierungswerkzeug nach Anspruch 1, wobei der Einspannschaft (8) von einer Betätigungsstange (13) verlängert ist, die mit einem Bedienungsgriff (14) abschließt.

## Claims

1. A locating tool intended to be installed in a bore in a component that passes through a wall of the latter delimited between an outer face and an inner face, having:
- a locating member (2) that is extended by a seating (3) that projects from the latter for the introduction thereof with a tight fit into the bore in the component until a shoulder (4) that ends the seating makes contact with the outer face of the component;
- a flange (6) that is intended to bear against the inner face of the component **characterized by** a clamping rod (8) that is equipped with a head (9) that bears against the flange, said clamping rod (8) passing through the flange and the centering member in order to take a clamping nut (12) for clamping against a bottom of the locating member;
and in that the head of the rod has a base with a convex shape that engages with a bearing surface on the flange so as to allow an angular orientation of the flange.

2. The locating tool as claimed in claim 1, wherein the base of the head of the clamping screw (8) has a spherical shape and engages with a spherical impression made in the internal side walls of a through-passage in the flange.

3. The locating tool as claimed in claim 1, wherein the flange has an elongate shape and has parallel side walls, being received in a central housing (5) in the seating that has parallel side walls.

4. The locating tool as claimed in claim 3, wherein the flange has an elongate through-passage.

5. The locating tool as claimed in claim 1, wherein the locating member is a cylindrical skirt (2).

6. The locating tool as claimed in claim 1, wherein the clamping rod (8) is extended by a maneuvering rod (13) ended by a maneuvering handle (14).
